# EUROPÄISCHE PATENTSCHRIFT

(11) **EP 1 223 000 B1**
(45) Veröffentlichungstag und Bekanntmachung des Hinweises auf die Patenterteilung: **14.04.2004**
(21) Anmeldenummer: 02000439.6
(22) Anmeldetag: 08.01.2002
(51) Int. Cl.: B23Q 1/01, B23Q 11/00, B23Q 11/08, B23Q 7/04, B23Q 7/08, B23Q 7/14, B23Q 17/20, B23Q 5/28, B23Q 37/00, B23Q 39/04

(54) **Automationszelle zur Handhabung von Werkstücken**
Automation system for handling workpieces
Cellule d'automatisation pour manipuler des pièces

(30) Priorität: 16.01.2001 DE 10102413
(43) Veröffentlichungstag der Anmeldung: 17.07.2002
(73) Patentinhaber: FELSOMAT GmbH & Co. KG, D-75203 Königsbach-Stein (DE)
(72) Erfinder: Jäger, Helmut F., 75203 Königsbach-Stein (DE)
(74) Vertreter: Gahlert, Stefan, Dr.-Ing.

(56) Entgegenhaltungen:
- EP-A- 0 865 869
- DE-A- 4 212 178
- DE-A- 19 915 023

## Beschreibung

Die Erfindung betrifft eine Automationszelle zur Handhabung von Werkstücken, mit einem Arbeitsraum, der mindestens einen Laderaum aufweist, in den ein Werkstückträger zur Aufnahme von Werkstücken von außen einführbar ist, mit einer Handhabungseinrichtung mit einer ersten Greifeinrichtung zur Übernahme von Werkstücken vom Werkstückträger und zum Verfahren von Werkstücken innerhalb des Arbeitsraums, und mit einem Portal, auf dem ein Schlitten mit einer zweiten Greifeinrichtung verfahrbar ist, um Werkstücke aus dem Arbeitsraum auszuschleusen und an eine zugeordnete Werkzeugmaschine zu übergeben, und um Werkstücke von der Werkzeugmaschine zu übernehmen und in den Arbeitsraum einzuschleusen.

Eine derartige Automationszelle ist aus der DE 197 20 906 A1 bekannt.

Die bekannte Automationszelle weist einen abgeschlossenen Arbeitsraum auf, in dem ein durch eine Schottwand abgetrennter Laderaum vorgesehen ist. In den Laderaum können Teile, die sich auf Werkstückträgerstapeln befinden, eingefahren bzw. mittels eines Stapelaustauschmoduls eingewechselt werden. Innerhalb des Arbeitsraums ist ein Bereitstellungsmodul vorgesehen, der Werkstückträger zwischen dem Laderaum und einem Warteplatz umstapeln kann und der einen Werkstückträger in eine Bereitstellungsposition bewegen kann, aus der mittels einer an einem Portal verfahrbaren und vertikal beweglichen Greifeinrichtung Teile entnommen werden können, zu einer zugeordneten Werkzeugmaschine verfahren werden können und bearbeitete Teile aus der Werkzeugmaschine aufgenommen und in den Werkstückträger wieder abgelegt werden können.

Die bekannte Automationszelle ist besonders für hohe Stückzahlen in der Serienfertigung geeignet, wobei durch Werkstückträgerstapel innerhalb des Arbeitsraums und innerhalb des Laderaums eine große Pufferwirkung auftritt, durch die eine Entkopplung zwischen Handhabung der Teile innerhalb des Handhabungsraums und Zuführung oder Entnahme der Teileträger aus dem Laderaum erreicht wird. Die bekannte Automationszelle ist somit zur Großserienfertigung von großen Teilen geeignet und kann auch zur gleichzeitigen Versorgung von mehreren Bearbeitungszentren verwendet werden. Andererseits wird durch das Drehgestell der Stapelwechseleinheit eine gewisse Breite der Zelle vorgegeben, die wegen des Drehkreises nicht vollständig für eine Palettenbreite genutzt werden kann. Auch ist die innerhalb des Handhabungsraums verwendete Ladeeinrichtung relativ aufwendig.

Aus der DE 198 24 014 A1 ist eine weitere Automationszelle mit einem nach außen abgeschlossenen Arbeitsraum bekannt, innerhalb dessen eine Ladeeinrichtung zur Aufnahme mindestens eines Teileträgers in Horizontalrichtung und in Vertikalrichtung verfahrbar angeordnet ist. In den Arbeitsraum können Teile mit Hilfe einer Zuführeinrichtung ein- bzw. ausgeschleust werden, die vorzugsweise als Transportwagen ausgebildet ist und mit einer Unterlage zur Aufnahme eines Teileträgers in Arbeitshöhe ausgebildet ist. Die Werkstückträger können durch eine Ladeöffnung, deren Öffnen und Schließen automatisch gesteuert wird, in den Arbeitsraum überführt werden.

Mit einer derartigen Automationszelle läßt sich zwar der hierdurch benötigte Raumbedarf relativ gering halten, jedoch werden innerhalb des Arbeitsraums lediglich vollständige Werkstückträger, jedoch keine einzelnen Werkstücke verfahren.

Für bestimmte Fertigungsaufgaben, beispielsweise bei der Herstellung von Einspritzpumpen für die Common-Rail-Technik, müssen die Werkstücke in der Werkzeugmaschine äußerst genau bearbeitet werden und in der Automationszelle zusätzlich z.B. vermessen werden oder einem sonstigen Arbeitsschritt unterzogen werden. So müssen die Werkstücke in der Automationszelle beispielsweise gekippt werden, vorgemessen werden, nachgemessen werden, oder einem Bürst- bzw. Reinigungsschritt unterzogen werden.

Insbesondere wegen der Kürze der Bearbeitungszeit bei kleinen Teilen sind zur Durchführung derartiger Zusatzaufgaben innerhalb der Automationszelle bislang gesonderte Handhabungseinrichtungen notwendig, die parallel arbeiten, damit die verschiedenen Bereitstellungs- und Zusatzaufgaben in der Automationszelle nicht zu einer Verzögerung des von der damit versorgten Werkzeugmaschine vorgegebenen Arbeitstaktes führen.

Der Erfindung liegt somit die Aufgabe zugrunde, eine verbesserte Automationszelle zur Handhabung von Werkstücken und ein verbessertes Verfahren zur Handhabung von Werkstücken zu schaffen, womit sich die Nachteile des Standes der Technik weitgehend vermeiden lassen. Insbesondere soll die Automationszelle einen möglichst einfachen und platzsparenden Aufbau aufweisen und die Zuführung bzw. Entnahme von Werkstücken zu einer bzw. aus einer zugeordneten Werkzeugmaschine auf möglichst einfache Weise mit ausreichender Schnelligkeit auch bei sehr kurzen Werkstückbearbeitungszeiten gewährleisten.

Diese Aufgabe wird bei einer Automationszelle gemäß der eingangs genannten Art erfindungsgemäß dadurch gelöst, daß die Handhabungseinrichtung als Flächenportal mit einer ersten, sich in Längsrichtung des Arbeitsraums erstreckenden Linearachse, die mit einer zweiten, sich in Querrichtung erstreckenden Linearachse gekoppelt ist, ausgebildet ist, wobei an einer der Linearachsen die erste Greifeinrichtung vertikal verfahrbar aufgenommen ist, und wobei innerhalb des Arbeitsraums mindestens eine Zusatzstation, wie eine Ausrichtstation, eine Vormeßstation, eine Nachmeßstation, eine Kipp-/Wendestation, eine Reinigungsstation oder ein Übergabeplatz zur zweiten Greifeinrichtung vorgesehen ist, wobei die erste Greifeinrichtung zwischen dem Werkstückträger und der zumindest einen Zusatzstation verfahrbar ist, wobei die zweite Greifeinrichtung zwischen der zumindest einen Zusatzstation und der Werkzeugmaschine verfahrbar ist, und wobei zumindest die Linearachsen des Flächenportals einen Linearmotorantrieb aufweisen.

Die Aufgabe der Erfindung wird auf diese Weise vollkommen gelöst.

Erfindungsgemäß wird es nämlich durch Kopplung eines Flächenportals, an dem die erste Greifeinrichtung in Längsrichtung und in Querrichtung des Arbeitsraums sowie in Vertikalrichtung verfahrbar ist, mit einem Portal zur Anbindung an die Werkzeugmaschine ermöglicht, Werkstücke innerhalb des von der Werkzeugmaschine vorgegebenen Arbeitstaktes rechtzeitig der Werkzeugmaschine zuzuführen und bearbeitete Werkstücke aus dieser abzuführen. Darüber können auch Zusatzfunktionen, wie z.B. Ausrichten, Vormessen oder Nachmessen, durchgeführt werden, ohne daß der Arbeitstakt der Werkzeugmaschine hiervon nachteilig beeinträchtigt wird. Dies wird im wesentlichen durch den Antrieb der Linearachsen des Flächenportals mittels Linearmotorantrieben ermöglicht, da infolge der hohen Antriebsgeschwindigkeit von Linearmotoren ausreichend Zeit zur Verfügung steht, um ohne Beeinträchtigung des Arbeitstaktes der Werkzeugmaschine Zusatzfunktionen ausführen zu können. Die erfindungsgemäße Automationszelle zeichnet sich durch einen besonders kompakten Aufbau aus, da keine zusätzlichen Antriebe für die Zusatzstationen erforderlich sind.

Die Aufgabe der Erfindung wird ferner durch ein Verfahren mit folgenden Schritten gelöst:
- Einbringen von Werkstücken auf einem Werkstückträger in einen Laderaum eines Arbeitsraums;
- Aufnehmen von Werkstücken vom Werkstückträger mittels einer ersten Greifeinrichtung, die an einem Flächenportal, das eine erste, sich in Längsrichtung des Arbeitsraums erstreckende Linearachse, sowie eine zweite, damit gekoppelte, sich in Querrichtung des Arbeitsraums erstreckende Linearachse aufweist, in Querrichtung und in Längsrichtung des Flächenportals sowie in Vertikalrichtung verfahrbar ist;
- Verfahren der Werkstücke zu einer zweiten Greifeinrichtung, die an einem Portal verfahrbar ist, das den Arbeitsraum mit einer zugeordneten Werkzeugmaschine verbindet, die eine Hauptzeit zur Bearbeitung eines Werkstückes und eine Nebenzeit zum Laden/Entladen eines Werkstückes aufweist;
- Verfahren jeweils eines Werkstückes mittels der zweiten Greifeinrichtung innerhalb der Hauptzeit aus dem Arbeitsraum zur Werkzeugmaschine;
- Übergeben des Werkstückes an die Werkzeugmaschine und Übernahme eines bearbeiteten Werkstückes aus der Werkzeugmaschine in der Nebenzeit;
- Verfahren des von der Werkzeugmaschine übernommenen Werkstückes in den Arbeitsraum während der Hauptzeit;
- Übernehmen eines Werkstückes von der zweiten Greifeinrichtung mittels der ersten Greifeinrichtung und Verfahren zu dem Werkstückträger in der Hauptzeit;
wobei
- die erste Greifeinrichtung innerhalb der Hauptzeit Werkstücke zwischen mindestens einer Zusatzstation, wie einer Ausrichtstation, einer Vormeßstation, einer Nachmeßstation, einer Kipp-/Wendestation, einer Reinigungsstation oder einer Ablagestation, und dem Werkstückträger übergibt und umgekehrt.

Erfindungsgemäß wird sich auf diese Weise der verbleibende Teil der Hauptzeit der Werkzeugmaschine, innerhalb derer die Bearbeitung eines Werkstückes erfolgt, genutzt, um nicht nur Transportfunktionen sondern darüber hinaus auch Zusatzfunktionen auszuführen.

In zusätzlicher Weiterbildung der Automationszelle ist die zweite Greifeinrichtung als V-Lader mit zwei Greifeinheiten ausgebildet, die abwechselnd auf linearen, V-förmig zusammenlaufenden Bewegungsbahnen zu einem vorgegebenen Punkt bewegbar sind.

Auf diese Weise wird es ermöglicht, auch innerhalb einer sehr kurzen Nebenzeit der Werkzeugmaschine bearbeitete Werkstücke zu übernehmen und der Werkzeugmaschine zu bearbeitende Werkstücke zuzuführen. Solche kurzen Nebenzeiten sind insbesondere bei kleinen Werkstücken mit kurzer Hauptzeit von Bedeutung. Zur weiteren Steigerung der Geschwindigkeit bei sehr kurzen Nebenzeiten ist es vorteilhaft, auch die zweite Greifeinrichtung mit Linearmotorantrieben zu versehen.

Die erste Greifeinrichtung der Automationszelle ist zweckmäßigerweise an einem von einer der Linearachsen angetriebenen Schlitten ausgebildet und umfaßt eine Vertikalführung, auf der ein Greifelement in Vertikalrichtung verfahrbar aufgenommen ist.

In weiter vorteilhafter Ausgestaltung der erfindungsgemäßen Automationszelle ist der Werkstückträger in eine Schublade einsetzbar, die in den Laderaum ein- und ausfahrbar ist.

Auf diese Weise wird ein besonders einfacher und platzsparender Aufbau der Automationszelle erreicht.

In zusätzlicher Weiterbildung dieser Ausführung sind nebeneinander zwei Laderäume vorgesehen, in die Werkstückträger einbringbar sind.

Durch diese Maßnahme wird der Wechsel von einem Werkstückträger auf einen anderen Werkstückträger ohne Unterbrechung der Handhabungsvorgänge innerhalb des Arbeitsraums ermöglicht.

Gemäß einer weiteren Ausführung der Erfindung sind drei nebeneinander angeordnete Laderäume zur Aufnahme von Werkstückträgern vorgesehen.

Diese Maßnahme hat den Vorteil, daß ein platzreines Arbeiten, d.h. eine Ablage der Werkstücke nach Bearbeitung auf ihrem ursprünglichen Platz auch dann ermöglicht wird, wenn in der betreffenden Werkzeugmaschine eine Mehrzahl von Werkstücken gespeichert wird, bevor diese wieder ausgegeben werden, wie dies z.B. bei Rundtakt-Maschinen der Fall ist. In solchen Fällen ist es nicht notwendig, die Werkzeugmaschine zunächst leer zu fahren, bevor mit der Bearbeitung des nächsten Werkstückträgers begonnen wird, da immer zwei Werkstückträger zur Bearbeitung zur Verfügung stehen, während der dritte Werkstückträger unabhängig davon be- bzw. entladen werden kann.

In weiterer vorteilhafter Ausgestaltung der Erfindung ist eine Abdeckung vorgesehen, die in Richtung der zweiten Linearachse verfahrbar ist, um einen der Laderäume zum Be- und Entladen berührungssicher gegenüber dem Arbeitsraum abzuschotten.

Auf diese Weise wird mit besonders einfachen Mitteln eine berührungssichere Abtrennung eines Laderaumes zum Be- bzw. Entladen vom Arbeitsraum ermöglicht, während gleichzeitig Werkstücke des oder der anderen Werkstückträger bearbeitet werden können.

In zusätzlicher Weiterbildung der Erfindung weist eine der Linearachsen mindestens zwei parallel zueinander angeordnete Linearmotorantriebe auf, die zum gemeinsamen Antrieb eines Schlittens synchron miteinander bewegliche Läufer aufweisen, wobei an einem der Läufer ein Hall-Sensor zur Abtastung des Induktorkamms des Linearmotorantriebs vorgesehen ist, dessen Ausgangssignal beiden Linearmotorantrieben zu deren Steuerung zugeführt ist.

Durch diese Ausführung, die auch unabhängig von der sonstigen Ausführung der Automationszelle selbständig schutzfähig ist, wird eine erhebliche Vereinfachung und eine erhebliche Kostenersparnis gegenüber herkömmlichen Linearmotorantrieben erreicht, da bei Verwendung zweier paralleler Linearmotorantriebe zur Bewegung eines gemeinsamen Schlittens in der Regel zwei Inkrementalmaßstäbe, beispielsweise zwei Glasmaßstäbe, erforderlich waren, um beide Linearmotorantriebe mit der erforderlichen Genauigkeit synchron zu steuern.

Es hat sich jedoch gezeigt, daß die Genauigkeit von üblichen Hall-Sensoren, die in der Größenordnung von etwa 1/100 Millimeter liegen, ausreicht, um den gewünschten synchronen Antrieb eines gemeinsamen Schlittens für die hier angesprochenen Handlingaufgaben zu gewährleisten.

In bevorzugter Weiterbildung der Erfindung weisen auch zumindest das Portal oder eine der Greifeinrichtungen einen Linearmotorantrieb auf.

Sofern auch die übrigen Antriebe der Automationszelle als Linearmotorantriebe ausgeführt werden, so läßt sich die Arbeitsgeschwindigkeit weiter erhöhen, wodurch mehr Zeit zur Erledigung weiterer Aufgaben innerhalb der Automationszelle zur Verfügung steht, ohne daß die hierdurch versorgte Werkzeugmaschine in ihrer Arbeitsgeschwindigkeit beeinträchtigt wird.

In bevorzugter Ausführung des erfindungsgemäßen Verfahrens erfolgt die Übergabe eines Werkstückes zwischen dem Werkstückträger und der zumindest einen Zusatzstation, sowie die darauf durchgeführte Arbeitsoperation innerhalb der Hauptzeit.

In zusätzlicher Weiterbildung des erfindungsgemäßen Verfahrens wird für zumindest eine der beiden Greifeinrichtungen eine Greifeinrichtung mit mindestens zwei Greifeinheiten für je ein Werkstück verwendet.

Dabei wird vorzugsweise als Greifeinrichtung ein V-Lader verwendet, der zwei Greifeinheiten aufweist, die abwechselnd auf linearen, V-förmig zusammenlaufenden Bewegungsbahnen zu einem vorgegebenen Punkt bewegbar sind.

Alternativ wäre es auch denkbar, beispielsweise einen H-Lader mit zwei Greifeinheiten oder einen I-Lader mit zwei etwa an einer Drehachse aufgenommenen Greifeinheiten zu verwenden.

Wie vorstehend bereits erwähnt, sind zumindest die Linearachsen des Flächenportals vorzugsweise mittels eines Linearmotorantriebs angetrieben.

Durch diese Maßnahmen wird eine besonders schnelle Arbeitsweise bei der Handhabung der Werkstücke unterstützt, um auch bei sehr schnell arbeitenden Werkzeugmaschinen die Zu- bzw. Abfuhr von Werkstücken und etwaige Zusatzoperationen innerhalb der Hauptzeit der Werkzeugmaschine durchführen zu können, ohne daß die Werkzeugmaschine warten muß.

Es versteht sich, daß die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine stark vereinfachte perspektivische Darstellung einer erfindungsgemäßen Automationszelle und
- Fig. 2: eine stark vereinfachte Aufsicht einer erfindungsgemäßen Automationszelle.

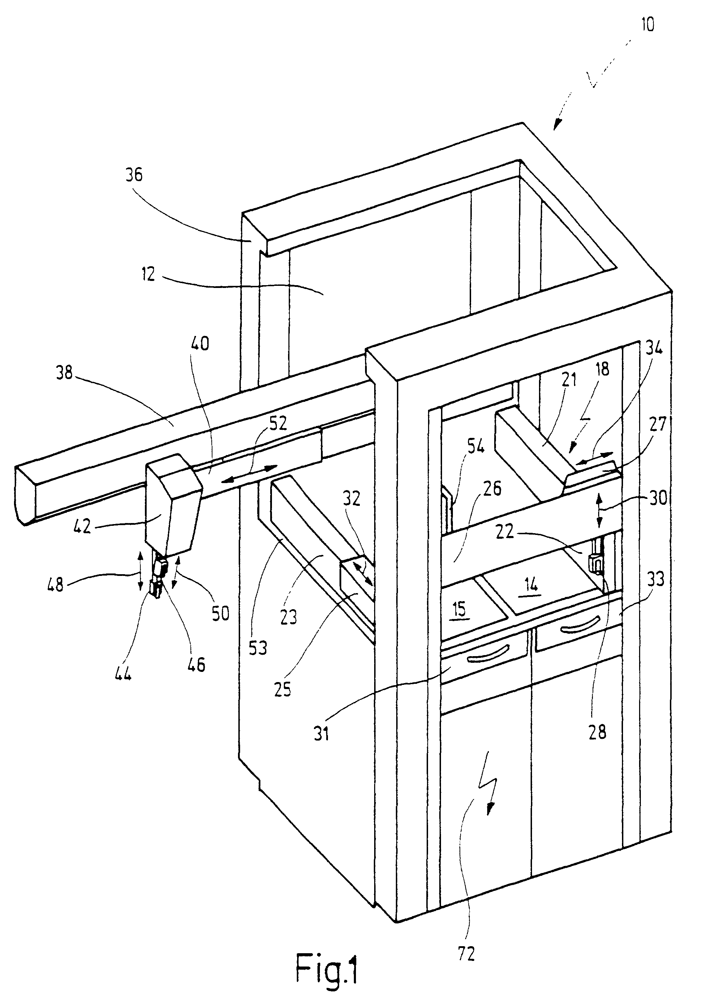

In Fig. 1 ist eine erfindungsgemäße Automationszelle insgesamt mit der Ziffer 10 bezeichnet.

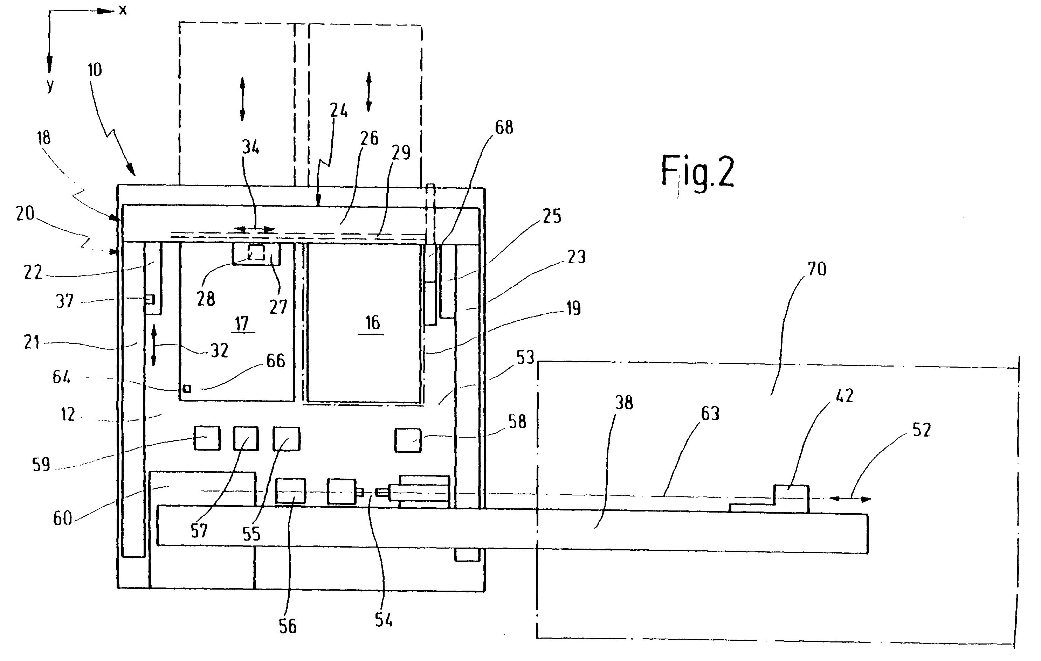

Die Automationszelle 10 umfaßt ein stabiles Gestell 36 mit vier vertikalen Streben, zwischen denen im oberen Bereich ein nach außen abgeschlossener Arbeitsraum 12 gebildet ist (zum Zwecke der besseren Erkennbarkeit sind die Verkleidungsbleche, durch die der Arbeitsraum 12 nach außen begrenzt ist, abgenommen). Auf der linken Seite steht aus dem Arbeitsraum 12 ein horizontal verlaufendes Portal 38 hervor, das sich über die gesamte Breite des Arbeitsraums 12 erstreckt und so weit aus dem Arbeitsraum 12 der Automationszelle 10 hervorsteht, daß das Portal 38 in eine zugeordnete Werkzeugmaschine 70 gemäß Fig. 2 hineinragen kann, um diese mit Werkstücken zu versorgen.

Die Handhabungseinrichtung 10 weist nebeneinander zwei Laderäume 14, 15 auf, die in Fig. 1 lediglich schematisch angedeutet sind. Am Gestell 36 sind zwei Schubladen 31, 33 befestigt, die gemäß Fig. 2 Werkstückträger 16, 17 aufnehmen und die in die Laderäume 14, 15 eingefahren bzw. ausgefahren werden können. Zum Beladen bzw. Entladen wird die jeweilige Schublade 31, 33 ausgezogen und ein Werkstückträger 16, 17 mit Werkstücken hineingesetzt bzw. herausgenommen. Es wäre auch denkbar, die Werkstücke einzeln manuell in die Schublade 31, 33 einzulegen bzw. daraus zu entnehmen. Alternativ könnten die Werkstückträger 16 bzw. 17 jeweils auf einem Transportwagen ausgebildet sein, der, wie etwa aus der DE 198 24 014 A1 grundsätzlich bekannt, in den Laderaum 14, 15 ein- bzw. ausgefahren wird.

In der in Fig. 1 dargestellten Stellung sind beide Schubladen 31, 33 in die Laderäume 14, 15 eingefahren, wobei sich die jeweiligen Werkstückträger 16, 17 innerhalb des Arbeitsraums 12 etwa auf halber Höhe der Automationszelle 10 befinden. Um einen berührungssicheren Abschluß des Arbeitsraums 12 nach außen zu gewährleisten und um sicherzustellen, daß die Werkstücke eines Werkstückträgers 16 oder 17 bearbeitet werden können, während der andere Werkstückträger 17 oder 16 zum Be- bzw. Entladen gefahrlos ausgefahren werden kann, ist eine Abdeckung vorgesehen, die in Fig. 2 lediglich mittels einer strichpunktierten Linie 19 angedeutet ist. Diese kann als Platte ausgebildet sein, die etwa an einer gestrichelt angedeuteten Führung 29 verfahrbar angeordnet ist, um den Laderaum 16 der Schublade 31, 33, die gerade nicht bearbeitet wird und die somit ganz oder teilweise ausgezogen sein kann, berührungssicher von oben gegenüber dem Arbeitsraum 12 abzuschließen. Dabei ist jede Schublade 31, 33 wie eine herkömmliche Schublade durch Seitenwände nach außen abgeschlossen und lediglich nach oben offen. Die gerade zu bearbeitende Schublade 31, 33 und die Abdeckung 19 werden in ihrer eingefahrenen Stellung bzw. ihrer Abdeckposition über der anderen Schublade 31, 33 z.B. mechanisch verriegelt. Alternativ hierzu könnte eine elektronische Sicherung vorgesehen sein.

Innerhalb des Arbeitsraums 12 ist ein Flächenportal 18 vorgesehen, das gemäß Fig. 2 eine erste, in Längsrichtung der Automationszelle 10 verlaufende Linearachse 20 (Y-Achse), sowie eine zweite, in Querrichtung der Automationszelle 10 verlaufende Linearachse 24 (X-Achse) aufweist. Die erste Linearachse 20 umfaßt zwei Linearmotorantriebe 21 und 23, die jeweils randseitig am Gestell 36 befestigt sind und einen Induktorkamm aufweisen, auf dem jeweils ein darauf geführter Läufer 22 bzw. 25 angetrieben ist (vgl. Doppelpfeil 32). Die beiden Läufer 22, 25 sind durch den Induktorkamm eines weiteren Linearmotorantriebs 26 verbunden, der die zweite Linearachse bildet. Der Induktorkamm des Linearmotorantriebs 26 ist also als Schlitten ausgebildet, der von den beiden Läufern 22, 25 der Linearmotorantriebe 21, 23 synchron angetrieben wird. Auf dem Induktorkamm des Linearmotorantriebs 26 ist ein Läufer 27 in X-Richtung angetrieben geführt (vgl. Doppelpfeil 34). Am Läufer 27 ist eine erste Greifeinrichtung 28 in Vertikalrichtung (Z-Richtung) verfahrbar aufgenommen, wie durch den Doppelpfeil 30 in Fig. 1 angedeutet ist.

Zur gemeinsamen Steuerung beider Linearmotorantriebe 21, 23 der Linearachse 20 ist am Läufer 22 ein Hall-Sensor 37 befestigt, der den Induktorkamm des Linearmotorantriebs 21 abtastet. Die Genauigkeit des Hall-Sensors 37 in der Größenordnung von etwa einem hundertstel Millimeter reicht für die synchrone Steuerung beider Linearmotorantriebe 21, 23 aus. Auf diese Weise kann auf die sonst notwendige Verwendung zweier Inkrementalmeßstäbe verzichtet werden.

Die erste Greifeinrichtung 28 kann praktisch über die gesamte Innenfläche des Arbeitsraums 12 verfahren werden, wobei Teile mit der vertikal verfahrbaren Greifeinrichtung 28 aufgenommen und an anderer Stelle wieder abgesetzt werden können.

An dem Portal 38, das an der den beiden Werkstückträgern 16, 17 gegenüberliegenden Rückseite am Gestell 36 befestigt ist, ist ein Schlitten 40 in X-Richtung verfahrbar geführt, wie durch den Doppelpfeil 52 angedeutet ist. Der Schlitten 40 an dem Portal 38 ist mittels eines nicht dargestellten Zahnriemenantriebs und eines Servomotors oder durch einen Linearmotorantrieb verfahrbar. Am äußeren Ende des Schlittens 40 ist eine zweite Greifeinrichtung 42 befestigt, die als z.B. V-Lader ausgebildet ist, mit zwei Greifeinheiten 44, 46, die abwechselnd auf linearen, V-förmig zusammenlaufenden Bewegungsbahnen zu einem darunterliegenden Punkt hin bewegbar sind, wie durch die Doppelpfeile 48, 50 angedeutet ist. Dieser V-Lader 42 ermöglicht es, abwechselnd die eine Greifeinheit 44 oder die andere Greifeinheit 46 zu verwenden, während sich die jeweils andere Greifeinheit in einer hochgefahrenen, eingezogenen Position befindet.

Auf einer Grundplatte 53 am Boden des Arbeitsraums 12, oberhalb derer sich die Werkstückträger 16, 17 befinden, ist eine Reihe von Zusatzstationen angeordnet, von denen in Fig. 1 lediglich eine beispielhaft mit der Ziffer 54 gekennzeichnet ist.

Wie aus der Darstellung in Fig. 2 zu ersehen ist, sind mehrere solcher Zusatzstationen unterhalb und vor dem Portal 38 in X-Richtung hintereinander angeordnet, wie durch die Ziffern 54, 56 und 60 angedeutet ist. Diese Zusatzstationen 54, 56, 60 befinden sich unterhalb der Verfahrachse 63 der zweiten, als V-Lader ausgebildeten Greifeinrichtung 42.

Bei diesen Zusatzstationen kann es sich um die unterschiedlichsten Einrichtungen handeln, beispielsweise um eine Vormeßstation 60 zum Paarungsschleifen, um eine Kippstation 56 und um eine Nachmeßstation 54.

Zumindest eine der Zusatzstationen 54, 56, 60 ist sowohl von der zweiten Greifeinrichtung 42 erreichbar, da sie sich unterhalb der Verfahrachse 63 der zweiten Greifeinrichtung 42 befinden, als auch von der ersten Greifeinrichtung 28 erreichbar.

Zusätzlich können innerhalb des von der ersten Greifeinrichtung 28 erreichbaren Raumes auf der Grundplatte 53 weitere Zusatzstationen angeordnet sein, beispielsweise eine Abblasstation oder Reinigungsstation 59, eine Ausrichtstation 57 und eine Zwischenablagestation 55, wie in Fig. 2 in einer Linie hintereinander angedeutet ist. Ferner kann eine Eichmeisterablage vorgesehen sein, wie durch die Ziffer 58 angedeutet ist. Die Eichmeisterablage 58 dient zur Aufnahme eines Eichstandards etwa für die Nachmeßstation 54. Sofern ein Kippen bzw. Wenden der Werkstücke nicht erforderlich ist, könnte die Kippstation 56 im einfachsten Fall auch lediglich als Ablageplatz oder Übergabestation ausgebildet sein.

In Fig. 2 ist zusätzlich noch am vorderen Rand seitlich eine Schleuse 68 zum Ein- bzw. Ausschleusen von SPC-Teilen (Prüfteilen) aus bzw. in den Arbeitsraum 12 angedeutet, sowie zum Ausschleusen von NIO-Teilen (Fehlerteilen).

Das Portal 38 reicht in den Arbeitsraum 12 einer daneben angeordneten, in Fig. 2 lediglich rein schematisch mit der Ziffer 70 angedeuteten Werkzeugmaschine hinein, die durch die Automationszelle 10 mit Werkstücken versorgt wird, die in Fig. 2 schematisch mit den Ziffern 64 und 66 angedeutet sind.

Im vorliegenden Fall könnte es sich beispielsweise bei der Werkzeugmaschine 70 um eine Schleifmaschine handeln, in der Werkstücke aufeinander abgestimmt geschliffen werden (Paarungsschleifen).

Zu diesem Zweck sind innerhalb des Arbeitsraums 12 der Automationszelle 10 die Vormeßstation 60, die Kippstation 56 und die Nachmeßstation 54 angeordnet. Vor der Zuführung zur Werkzeugmaschine 70 wird eines der Werkstücke 64 auf der Vormeßstation 60 vorgemessen und in den Werkstückträger zurückgelegt. Parallel dazu wird das zugeordnete andere Werkstück 66 mittels der zweiten Greifeinrichtung 42 zur Werkzeugmaschine 70 überführt und an deren Lader übergeben und nach der Bearbeitung von der zweiten Greifeinrichtung 42 wieder übernommen, zum Arbeitsraum 12 der Automationszelle 10 verfahren und auf der Nachmeßstation 54 nachgemessen. Befinden sich die Istmaße innerhalb der vorgegebenen Toleranz, so wird das betreffende Werkstück 66 anschließend wieder auf dem Werkstückträger 17 nacheinander in gepaarter Anordnung mit dem vorgemessenen Werkstück 64 abgelegt, das beim Paarungsschleifen nicht in der Werkzeugmaschine 70 bearbeitet wird, sondern lediglich vorgemessen wird, um die Bearbeitung des Werkstücks 66 darauf abzustimmen.

Über die Schleuse 68 können zusätzlich SPC-Teile zur externen Prüfung aus- bzw. eingeschleust werden und Teile, die sich nicht in der vorgegebenen Toleranz befinden (NIO-Teile) aus dem Arbeitsraum 12 ausgeschleust werden.

Die Arbeitsweise der Automationszelle 10 ist die folgende:
Zunächst werden Werkstückträger 16 bzw. 17 mit Werkstücken 64 bzw. 66 in eine der Schubladen 31, 33 von Hand eingesetzt und die Schublade 33 in den Laderaum 14 eingefahren, die in der eingefahrenen Stellung mit der Automationszelle 10 verriegelt, um einen nach außen berührungssicheren Abschluß des Arbeitsraums 12 zu gewährleisten. Gleichzeitig wird der andere Laderaum 16 durch die Abdeckung 19 abgedeckt, um während der nachfolgenden Bearbeitung der Werkstücke 64 bzw. 66 die andere Schublade 31 beladen zu können.

Nunmehr werden nacheinander mittels der ersten Greifeinrichtung 28 Werkstücke 64 bzw. 66 entweder zur Vormeßstation 60 verfahren oder auf der daneben befindlichen Kippstation 56 abgelegt. Von der Kippstation 56 können Werkstücke von einer der Greifeinheiten 44 bzw. 46 der zweiten Greifeinrichtung 42 unmittelbar übernommen werden und zur Werkzeugmaschine 70 verfahren werden. Aus der Werkzeugmaschine 70 kann ein bearbeitetes Werkstück mittels der noch freien Greifeinheit 44 oder 46 der zweiten Greifeinrichtung 42 übernommen werden und sogleich ein zu bearbeitendes Werkstück zugeführt werden. Dies geschieht in der sogenannten Nebenzeit der Werkzeugmaschine 70, d.h. in der Lade-/Entladezeit, die so kurz wie möglich sein soll, um eine möglichst hohe Produktivität der Werkzeugmaschine zu gewährleisten.

Alle anderen Vorgänge, wie Transportvorgänge und sonstige Zusatzoperationen, wie z.B. Meßvorgänge, Reinigungsvorgänge oder dergleichen, erfolgen während der Hauptzeit der Werkzeugmaschine 70, also während der Bearbeitungszeit eines Werkstückes. Dieser Ablauf wird insbesondere dadurch ermöglicht, daß die beiden Linearachsen 20 bzw. 24 von schnellen Linearmotoren angetrieben sind und daß die zweite Greifeinrichtung 42 als Doppelgreifeinrichtung ausgebildet ist, die die Übernahme eines bearbeiteten Teiles und die sofort anschließende Zuführung eines Rohteiles an die Werkzeugmaschine 70 erlaubt.

Infolge der schnellen Verfahrweise der ersten Greifeinrichtung 28 können zusätzlich während der nicht ausgenutzen Hauptzeit weitere Zusatzfunktionen ausgeführt werden, wie z.B. ein Reinigen (z.B. durch Bürsten oder Abblasen mit Preßluft) an einer Reinigungsstation 59 oder ein Ausrichten. In vielen Fällen befinden sich die zu bearbeitenden Werkstücke auf den Werkstückträgern 16, 17 in einer 90° gegenüber der Bearbeitungsposition innerhalb der Werkzeugmaschine 70 verkippten Lage, so daß sie vor der Zuführung zur Werkzeugmaschine auf der Kippstation 56 um 90° gekippt werden. Des weiteren kann im noch nicht genutzten Teil der Hauptzeit beispielsweise auch eine Nacheichung der Vormeßstation 60 oder der Nachmeßstation 54 erfolgen, wozu die Eichmeisterablage 58 vorgesehen ist. Der darauf abgelegte Eichstandard kann mittels der ersten Greifeinrichtung 28 zu der betreffenden Meßstation 54 bzw. 60 verfahren werden und nach erfolgter Messung wieder dort abgelegt werden.

Es versteht sich, daß die verschiedenartigsten Variationen durch andere oder gegebenenfalls zusätzliche Zusatzstationen denkbar sind und daß die jeweilige Betriebsweise der Automationszelle 10 von den jeweiligen Anforderungen des Prozesses innerhalb der Werkzeugmaschine 70 abhängt bzw. daran angepaßt werden kann.

Wegen der hohen Trägheitskräfte, die durch das schnelle Anfahren und Abbremsen der Linienmotorantriebe auftreten können, ist das Gestell 36 der Automationszelle vorteilhaft mit einer ausreichenden Dämpfungsmasse ausgebildet und besteht beispielsweise aus Polymerbeton.

Um einen möglichst kompakten Aufbau der Automationszelle 10 zu erreichen, ist die Steuerung 72 für die Zelle 10 in den Bereich unterhalb der Schubladen 31, 33 integriert.

## Patentansprüche

1. Automationszelle zur Handhabung von Werkstücken, mit einem Arbeitsraum (12), mit mindestens einem Laderaum (14, 15), in den ein Werkstückträger (16, 17) zur Aufnahme von Werkstücken (64, 66) von außen einfahrbar ist, mit einer Handhabungseinrichtung mit einer ersten Greifeinrichtung (28) zur Übernahme von Werkstücken (64, 66) vom Werkstückträger (16, 17) und zum Verfahren von Werkstücken (64, 66) innerhalb des Arbeitsraums (12), und mit einem Portal (38), auf dem ein Schlitten (40) mit einer zweiten Greifeinrichtung (42) verfahrbar ist, um Werkstücke (64, 66) aus dem Arbeitsraum (12) auszuschleusen und an eine zugeordnete Werkzeugmaschine (70), zu übergeben und um Werkstücke (64, 66) von der Werkzeugmaschine (70) zu übernehmen und in den Arbeitsraum (12) einzuschleusen, **dadurch gekennzeichnet, daß** die Handhabungseinrichtung als Flächenportal (18) mit einer ersten, sich in Längsrichtung des Arbeitsraums (12) erstreckenden Linearachse (20), die mit einer zweiten sich in Querrichtung erstreckenden Linearachse (24) gekoppelt ist, ausgebildet ist, wobei an einer der Linearachsen (20, 24) die erste Greifeinrichtung (28) vertikal verfahrbar aufgenommen ist, daß innerhalb des Arbeitsraums (12) mindestens eine Zusatzstation (54, 55, 56, 57, 58, 59, 60), wie eine Ausrichtstation (57), eine Vormeßstation (54), eine Nachmeßstation (60), eine Kipp-/Wendestation (56), eine Reinigungsstation (59), eine Ablagestation (55) oder eine Eichmeisterablage (58) vorgesehen ist, daß die erste Greifeinrichtung (28) zwischen dem Werkstückträger (16, 17) und zumindest einer Zusatzstation (54, 55, 56, 57, 58, 59, 60) verfahrbar ist, daß die zweite Greifeinrichtung (42) zwischen zumindest einer Zusatzstation (54, 56, 60) und der Werkzeugmaschine (70) verfahrbar ist, und daß zumindest die Linearachsen (20, 24) des Flächenportals (18) einen Linearmotorantrieb aufweisen.

2. Automationszelle nach Anspruch 1, **dadurch gekennzeichnet, daß** die zweite Greifeinrichtung (42) als V-Lader mit zwei Greifeinheiten (44, 46) ausgebildet ist, die abwechselnd auf linearen, V-förmig zusammenlaufenden Bewegungsbahnen zu einem vorgegebenen Punkt bewegbar sind.

3. Automationszelle nach Anspruch 1 oder 2, **dadurch gekennzeichnet, daß** die erste Greifeinrichtung (28) an einem von einer der Linearachsen (20, 24) angetriebenen Schlitten (27) ausgebildet ist und eine Vertikalführung umfaßt, auf der ein Greifelement (28) in Vertikalrichtung verfahrbar aufgenommen ist.

4. Automationszelle nach einem der vorhergehenden Ansprüche, **dadurch gekennzeichnet, daß** zur Aufnahme des Werkstückträgers (16, 17) eine Schublade (31, 33) vorgesehen ist, die in den Laderaum (14, 15) ein- und ausfahrbar ist.

5. Automationszelle nach Anspruch 4, **dadurch gekennzeichnet, daß** nebeneinander zwei Laderäume (14, 15) zur Aufnahme von Werkstückträgern (16, 17) vorgesehen sind.

6. Automationszelle nach Anspruch 4, **dadurch gekennzeichnet, daß** nebeneinander drei Laderäume zur Aufnahme von Werkstückträgern vorgesehen sind.

7. Automationszelle nach einem der Ansprüche 4 bis 6, **dadurch gekennzeichnet, daß** eine Abdeckung (19) vorgesehen ist, die in Richtung der zweiten Linearachse (24) verfahrbar ist, um einen der Laderäume (16, 17) zum Be- und Entladen berührungssicher gegenüber dem Arbeitsraum (12) abzuschotten.

8. Automationszelle nach einem der vorhergehenden Ansprüche, **dadurch gekennzeichnet, daß** zumindest das Portal (38) oder eine der Greifeinrichtungen (28, 42) einen Linearmotorantrieb aufweisen.

9. Automationszelle zur Handhabung von Werkstücken, nach einem der vorhergehenden Ansprüche, mit mindestens zwei parallel zueinander angeordneten Linearmotorantrieben (21, 23), deren Läufer (22, 25) zum gemeinsamen Antrieb eines Schlittens synchron miteinander beweglich sind, **dadurch gekennzeichnet, daß** an einem der beiden Läufer (22, 25) ein Hall-Sensor (37) zur Abtastung des Induktorkamms vorgesehen ist, der mit beiden Linearmotorantrieben (21, 23) zu deren Steuerung gekoppelt ist.

10. Verfahren zum Handhaben von Werkstücken mit folgenden Schritten:
- Einbringen von Werkstücken (64, 66) auf einem Werkstückträger (16, 17) in einen Laderaum (14, 15) eines Arbeitsraums (12);
- Aufnehmen von Werkstücken (64, 66) vom Werkstückträger (16, 17) mittels einer ersten Greifeinrichtung (28), die an einem Flächenportal (18), das eine erste, sich in Längsrichtung des Arbeitsraums (12) erstreckende Linearachse (20), sowie eine zweite, damit gekoppelte, sich in Querrichtung des Arbeitsraums (12) erstreckende Linearachse (24) aufweist, in Querrichtung und in Längsrichtung des Flächenportals (18) sowie in Vertikalrichtung verfahrbar ist;
- Verfahren der Werkstücke (64, 66) zu einer zweiten Greifeinrichtung (42), die an einem Portal (38) verfahrbar ist, das den Arbeitsraum (12) mit einer zugeordneten Werkzeugmaschine (70) verbindet, die eine Hauptzeit zur Bearbeitung eines Werkstückes (64, 66) und eine Nebenzeit zum Laden/Entladen eines Werkstückes (64, 66) aufweist;
- Verfahren jeweils eines Werkstückes (64, 66) mittels der zweiten Greifeinrichtung (42) innerhalb der Hauptzeit aus dem Arbeitsraum (12) zur Werkzeugmaschine (70);
- Übergeben des Werkstückes (64, 66) an die Werkzeugmaschine (70) und Übernahme eines bearbeiteten Werkstückes (64, 66) aus der Werkzeugmaschine (70) in der Nebenzeit;
- Verfahren des von der Werkzeugmaschine (70) übernommenen Werkstückes (64, 66) in den Arbeitsraum (12) während der Hauptzeit;
- Übernehmen eines Werkstückes (64, 66) von der zweiten Greifeinrichtung (42) mittels der ersten Greifeinrichtung (28) und Verfahren zu dem Werkstückträger (16, 17) in der Hauptzeit;
wobei
- die erste Greifeinrichtung (28) innerhalb der Hauptzeit Werkstücke (64, 66) zwischen mindestens einer Zusatzstation (54, 55, 56, 57, 59, 60), wie einer Ausrichtstation (57), einer Vormeßstation (60), einer Nachmeßstation (54), einer Kipp/Wendestation (56), einer Reinigungsstation (59) oder einer Ablagestation (55), und dem Werkstückträger (16, 17) übergibt und umgekehrt.

11. Verfahren nach Anspruch 10, bei dem die Übergabe eines Werkstückes (64, 66) zwischen dem Werkstückträger (16, 17) und der zumindest einen Zusatzstation (54, 55, 56, 57, 59, 60), sowie die darauf durchgeführte Arbeitsoperation innerhalb der Hauptzeit erfolgt.

12. Verfahren nach Anspruch 10 oder 11, bei dem für zumindest eine (42) der beiden Greifeinrichtungen (28, 42) eine Greifeinrichtung mit mindestens zwei Greifeinheiten (44, 46) für je ein Werkstück (64, 66) verwendet wird.

13. Verfahren nach Anspruch 12, bei dem als Greifeinrichtung (42) ein V-Lader verwendet wird, der zwei Greifeinheiten (44, 46) aufweist, die abwechselnd auf linearen, V-förmig zusammenlaufenden Bewegungsbahnen zu einem vorgegebenen Punkt bewegbar sind.

14. Verfahren nach einem der Ansprüche 10 bis 13, bei dem zumindest die Linearachsen (20, 24) des Flächenportals (18) und/oder des V-Laders (42) und/oder des Portals (38) mittels eines Linearmotorantriebs (21, 23, 26) angetrieben werden.

## Claims

1. An automated cell for handling workpieces, having a working space (12), having at least a loading space (14, 15) into which a workpiece carrier (16, 17) for receiving workpieces can be transferred from the outside, having a handling device with a first gripping device (28) for receiving workpieces (64, 66) from the workpiece carrier (16, 17) and for transferring of workpieces (64, 66) within the working space (12), and having a gantry (38) upon which a carriage (40) having a second gripping device (42) is displaceable, for removing workpieces from the working space (12) and transferring same to a machine tool (70) assigned thereto, and for receiving workpieces (64, 66) from the machine tool (70) and for transferring same into the working space (12), **characterized in that** the handling device is configured as a two-dimensional gantry (18) having a first linear axis (20) extending in longitudinal direction of the working space (12) and being coupled with a second longitudinal axis (24) extending in transverse direction, wherein the first gripping device (28) is received on one of the linear axes (20, 24) vertically displaceably, **in that** at least one supplementary station (54, 55, 56, 57, 58, 59, 60) such as an aligning station (57), a pre-measuring station (54), a final measuring station (60), a tilting/reversing station (56), a cleaning station, a support station (55) or a master holding station (58) is provided, **in that** the first gripping device (28) is displaceable between the first workpiece carrier (16, 17) and at least one supplementary station (54, 55, 56, 57, 58, 59, 60), **in that** the second gripping device (42) is displaceable between at least one supplementary station (54, 56, 60) and the machine tool (70), and **in that** the linear axes (20, 24) of the two-dimensional gantry comprise at least one linear motor drive.

2. The automated cell of claim 1, **characterized in that** the second gripping device (42) is configured as a V-shaped loader having two gripping units (44, 46) that are movable alternately on linear motion paths converging in a V-shaped manner, to a predetermined point.

3. The automated cell of claim 1 or 2, **characterized in that** the first gripping device (28) is arranged on a carriage (27) driven by one of the linear axes (20, 24) and comprises a vertical guidance on which a gripping element (28) is arranged movably in vertical direction.

4. The automated cell of one of the preceding claims, **characterized in that** a drawer (31, 33) movable into and out of the working space is provided for receiving the workpiece carrier (16, 17).

5. The automated cell of claim 4, **characterized in that** two loading spaces (14, 15) are provided adjacent each other for receiving workpiece carriers (16, 17).

6. The automated cell of claim 4, **characterized in that** three loading spaces (14, 15) are provided adjacent each other for receiving workpiece carriers (16, 17).

7. The automated cell of one of claims 4 to 6, **characterized in that** a cover (19) is provided movable in the direction of the second linear axis (24), for separating one of the loading spaces (16, 17) from the working space (12) protected against contact when loading and unloading.

8. The automated cell of one of the preceding claims, **characterized in that** at least the gantry (38) or one of the gripping device (28, 42) comprises a linear motor drive.

9. An automated cell for handling workpieces according to one of the preceding claims, comprising at least two linear motor drives (21, 23) arranged parallel two each other, the sliders (22, 25) of which being movable together in synchrony for commonly driving a carriage, **characterized in that** at least one of the sliders (22, 25) comprises a hall sensor (37) for sensing the inductor rail, the hall sensor being coupled with both linear motor drives for controlling same.

10. A process for handling workpieces comprising the following steps:
- transferring workpieces (64, 66) on a workpiece carrier (16, 17) into a loading space (14, 15) of a working space (12);
- picking up workpieces (64, 66) from the workpiece carrier (16, 17) by means of a first gripping device (28) being displaceable in transverse and longitudinal direction (18) and in vertical direction of a two-dimensional gantry (18) which comprises a first linear axis (20) extending in longitudinal direction of the working space (12), and a second linear axis (24) extending in transverse direction of the working space and being coupled with the first linear axis;
- displacing the workpieces (64, 66) to a second gripping device (42) being dislaceable along a gantry (38) which connects the working space (12) with a machine tool allocated thereto which has a main time for machining a workpiece (64, 66) and an idle time for loading and unloading workpieces (64, 66);
- within the main time transfering a workpiece (64, 66) by means of the second gripping device (42) from the working space (12) toward the machine tool (70);
- within the idle time delivering the workpiece (64, 66) to the machine tool (70) and receiving a machined workpiece from the machine tool (70);
- within the main time displacing the workpiece (64, 66) received from the machine tool (70) into the working space (12);
- within the main time receiving a workpiece (64, 66) from the second gripping device (42) by means of the first gripping device (28) and displacing toward the workpiece carrier;
wherein
- the first gripping device (28) within the main time delivers and receives workpieces (64, 66) between at least one supplementary station (54, 55, 56, 57, 59, 60), such as an aligning station (57), a tilting/reversing station (56), a cleaning station (59) or a support station (55), and the workpiece carrier, and vice versa.

11. The process of claim 10, wherein the transfer of a workpiece (64, 66) between the workpiece carrier (16, 17) and the at least one supplementary station (54, 55, 56, 57, 59, 60), as well as the subsequent processing operation is effected within the main time.

12. The process of claim 10 or 11, wherein for at least one (42) of both gripping device (28, 42) a gripping device is utilized that comprises two gripping units, respectively, one for each workpiece (64, 66).

13. The process of claim 12, wherein a V-shaped loader is utilized as the gripping device (42), the loader comprising two gripping units (44, 46) that are alternately movable along linear motion paths converging in a V-shaped manner, toward a predetermined point.

14. The process of one of claims 10 to 13, wherein at least the linear axes (20, 24) of the two-dimensional gantry (18) and/or of the V-shaped loader (42) and/or of the gantry (38) are driven by a linear motor drive (21, 23, 26).

## Revendications

1. Cellule d'automation permettant la manutention de pièces à usiner, avec un espace de travail (12), avec au moins un espace de chargement (14, 15), dans lequel un montage porte-pièce (16, 17) destiné à la réception des pièces à usiner (64, 66) peut être introduit de l'extérieur, avec un dispositif de manutention pourvu d'un premier dispositif de préhension (28) permettant le transfert des pièces à usiner (64, 66) depuis le montage porte-pièce (16, 17) et permettant le déplacement des pièces à usiner (64, 66) à l'intérieur de l'espace de travail (12), et avec une traverse (38) sur laquelle un coulisseau (40) peut être déplacé avec un second dispositif de préhension (42), afin d'éjecter les pièces à usiner (64, 66) de l'espace de travail (12) et de les transférer sur une machine-outil (70), et afin de réceptionner les pièces à usiner (64, 66) depuis la machine-outil (70) et de les injecter dans l'espace de travail (12), **caractérisé en ce que** le dispositif de manutention est réalisé en tant que traverse de surface (18) avec un premier axe linéaire (20) s'étendant dans le sens longitudinal de l'espace de travail (12) lequel axe est accouplé avec un second axe linéaire (24) s'étendant dans le sens transversal, le premier dispositif de préhension (28) étant reçu verticalement sur un des axes linéaires (20, 24) de manière à pouvoir être déplacé, **en ce que** à l'intérieur de l'espace de travail (12), il est prévu au moins un poste secondaire (54, 55, 56, 57, 58, 59, 60), tel qu'un poste de départ (57), un poste de mesurage préliminaire (54), un poste de contrôle des mesures (60), un poste de renversement et de retournement (56), un poste de nettoyage (59), un poste de réception (55) ou une réception auxiliaire d'étalonnage (58), **en ce que** le premier dispositif de préhension (58) peut être déplacé entre le montage porte-pièce (16, 17) et au moins un poste secondaire (54, 55, 56, 57, 58, 59, 60), **en ce que** le second dispositif de préhension (42) peut être déplacé entre au moins un poste secondaire (54, 56, 60) et la machine-outil (70), et **en ce que** au moins les axes linéaires (20, 24) de la traverse de surface (18) comprennent un entraînement linéaire par moteur.

2. Cellule d'automation selon la revendication 1, **caractérisée en ce que** le second dispositif de préhension (42) est réalisé en tant que chargeur en V pourvu de deux unités de préhension (44, 46), qui peuvent être déplacées vers un point prédéfini de manière alternative sur des voies de déplacement convergentes, linéaires, en forme de V.

3. Cellule d'automation selon la revendication 1 ou 2, **caractérisée en ce que** le premier dispositif de préhension (28) est réalisé sur un coulisseau actionné par un des axes linéaires (20, 24) et comporte une glissière verticale, sur laquelle un élément de préhension (28) est reçu dans la direction verticale de manière à pouvoir être déplacé.

4. Cellule d'automation selon l'une quelconque des revendications précédentes, **caractérisée en ce qu'**un tiroir (31, 33) est prévu pour la réception du montage porte-pièce (16, 17), lequel tiroir peut entrer et sortir dans l'espace de chargement (14, 15).

5. Cellule d'automation selon la revendication 4, **caractérisée en ce que** deux espaces de chargement (14, 15) disposés l'un à côté de l'autre sont prévus pour la réception des montages porte-pièce (16, 17).

6. Cellule d'automation selon la revendication 4, **caractérisée en ce que** trois espaces de chargement disposés l'un à côté de l'autre sont prévus pour la réception des montages porte-pièce.

7. Cellule d'automation selon l'une quelconque des revendications 4 à 6, **caractérisée en ce qu'**il est prévu un couvercle (19) qui peut être déplacé dans la direction des deux axes linéaires (24) afin de cloisonner un des espaces de chargement (16, 17) en vue d'un chargement et d'un déchargement sans contact vis-à-vis de l'espace de travail (12).

8. Cellule d'automation selon l'une quelconque des revendications précédentes, **caractérisée en ce que** au moins la traverse (38) ou l'un des dispositifs de préhension (28, 42) comprend un entraînement linéaire par moteur.

9. Cellule d'automation permettant la manutention de pièces, selon l'une quelconque des revendications précédentes, pourvue d'au moins deux entraînements linéaires par moteur (21, 23) disposés parallèlement l'un à l'autre, dont les rotors (22, 25) sont mobiles de manière synchrone l'un avec l'autre en vue d'un entraînement commun du coulisseau, **caractérisée en ce qu'**il est prévu un détecteur de hall (37) sur l'un des deux rotors (22, 25) en vue du balayage du peigne d'induction qui est accouplé avec les deux entraînements linéaires par moteur (21, 23) en vue de leur commande.

10. Procédé permettant la manutention de pièces à usiner comprenant les étapes suivantes :
- charger les pièces à usiner (64, 66) sur un montage porte-pièce (16, 17) dans un espace de chargement (14, 15) d'un espace de travail (12) ;
- recueillir les pièces à usiner (64, 66) sur les montages porte-pièce (16, 17) au moyen d'un premier dispositif de préhension (28) qui peut être déplacé sur une traverse de surface (18) dans la direction transversale et dans la direction longitudinale de la traverse de surface (18) ainsi que dans la direction verticale, laquelle traverse comporte, un premier axe linéaire (20) s'étendant dans la direction longitudinale de l'espace de travail (12), ainsi qu'un second axe linéaire (24), accouplé avec ledit premier axe linéaire, s'étendant dans la direction transversale de l'espace de travail (12) ;
- déplacer les pièces à usiner (64, 66) vers un second dispositif de préhension (42) qui est déplaçable sur une traverse (38), qui relie l'espace de travail (12) avec une machine-outil (70) associée, qui comporte un temps principal pour l'usinage d'une pièce à usiner (64, 66) et un temps secondaire pour le chargement/le déchargement d'une pièce à usiner (64, 66) ;
- déplacer respectivement une pièce à usiner (64, 66) au moyen du second dispositif de préhension (42) à l'intérieur du temps principal depuis l'espace de travail (12) en direction de la machine-outil (70) ;
- transférer la pièce à usiner (64, 66) sur la machine-outil (70) et réceptionner une pièce à usiner (64, 66) hors de la machine-outil (70) dans le temps secondaire ;
- déplacer la pièce à usiner réceptionnée depuis la machine-outil (70) dans l'espace de travail (12) pendant le temps principal ;
- réceptionner une pièce à usiner (64, 66) du second dispositif de préhension (42) au moyen du premier dispositif de préhension (28) et la déplacer vers un montage porte-pièce (16, 17) dans le temps principal ;
moyennant quoi,
- le premier dispositif de préhension (28) transfert à l'intérieur du temps principal les pièces à usiner (64, 66) entre au moins un poste secondaire (54, 55, 56, 57, 59, 60), tel qu'un poste de départ (57), un poste de mesurage préliminaire (60), un poste de contrôle des mesures (54), un poste de renversement et de retournement (56), un poste de nettoyage (59) ou un poste de réception (55), et le montage porte-pièce (16, 17) et inversement.

11. Procédé selon la revendication 10, selon lequel le transfert d'une pièce à usiner (64, 66) entre le montage porte-pièce (16, 17) et le au moins un poste secondaire (54, 55, 56, 57, 59, 60), ainsi que l'opération de travail qui y est réalisée a lieu pendant le temps principal.

12. Procédé selon la revendication 10 ou 11, selon lequel pour au moins l'un des dispositifs de préhension (28, 42) un dispositif de préhension avec au moins deux unités de préhension (44, 46) pour chaque pièce à usiner (64, 66) est utilisé.

13. Procédé selon la revendication 12, selon lequel un chargeur en V est utilisé en tant que dispositif de préhension (42), lequel chargeur comporte deux unités de préhension (44, 46) qui peuvent être déplacées vers un point prédéfini de manière alternative sur des voies de déplacement convergentes, linéaires, en forme de V.

14. Procédé selon l'une quelconque des revendications 10 à 13, selon lequel au moins les axes linéaires (20, 24) de la traverse de surface (18) et/ou du chargeur en V (42) et/ou de la traverse (38) sont actionnés au moyen d'un entraînement linéaire par moteur (21, 23, 26).
